# EUROPEAN PATENT SPECIFICATION

(11) **EP 1 811 792 B1**
(45) Date of publication and mention of the grant of the patent: **03.02.2010**
(21) Application number: 05791915.1
(22) Date of filing: 28.09.2005
(51) Int. Cl.: H04W 72/12, H04W 8/24, H04W 72/04

(54) **A METHOD FOR IDENTIFING THE RECEIVER'S STATE AND LOCATION DURING GROUP COMMUNICATION**
VERFAHREN ZUM IDENTIFIZIEREN DES ZUSTANDS UND ORTS DES EMPFÄNGERS WÄHREND DER GRUPPENKOMMUNIKATION
PROCEDE POUR IDENTIFIER L'ETAT D'UN RECEPTEUR ET LE LOCALISER AU COURS D'UNE COMMUNICATION DE GROUPE

(30) Priority: 09.10.2004 CN 200410081079
(43) Date of publication of application: 25.07.2007
(73) Proprietor: Huawei Technologies Co., Ltd., Longgang District, Shenzhen, Guangdong Province 518129 (CN)
(72) Inventor: YANG, Changdong, Shenzhen, Guangdong 518129 (CN)
(74) Representative: Epping - Hermann - Fischer
(86) International application number: PCT/CN2005/001588
(87) International publication number: WO 2006/037266

(56) References cited:
- WO-A-00/10353
- WO-A-93/22883
- WO-A-2004/031887
- CN-A- 1 441 569
- JP-A- 2004 228 885
- US-A- 5 678 192
- US-A- 5 701 298
- US-A1- 2001 044 313
- US-A1- 2002 181 423
- US-A1- 2004 028 109
- US-A1- 2004 105 400

## Description

### Field of the Invention

The present invention relates to the technical field of network communications, in particular, to a method for identifying the state and location of a listener during a trunking communication process. The present invention further relates to a mobile terminal.

### Background of the Invention

As a new growth point of wireless communication, trunking communication attracts more and more attention of carriers. GT800 trunking communication realizes trunking group service via channel sharing, so that the utilization ratio of network resource is improved greatly and good characteristics of trunking communication are ensured. GT800 trunking group service of thousands of users may be realized by sharing one service channel; that is, call initiating parties compete for an uplink channel, while call receiving parties share a downlink channel. GT800 trunking communication attracts more and more trunking users for its advantages such as rapid access, high security and reliability and so on.

However, since a listener (i.e. mobile terminals) in GT800 trunking communication receives a voice passively in a group call channel without information interaction with a network side, the network side cannot know the current state of each listener during trunking communication. As a result, the network side cannot know which listeners are in listener-receiving state and may receive a delivered voice normally, and which listeners are not on-position and not in listener-receiving state, that is, cannot receive a delivered voice normally. During trunking communication, the network side usually wants to know whether a group call message it delivers may be received by all the concerned users in the group, thus the network side must know whether the current listener is in listener-receiving state. However, at present, there exists no method which enables the network side to know the state of each listener in trunking communication.

US patent 5678192 describes a radio system including a fixed radio network having base stations and mobile radio stations. Each mobile station with no ongoing call normally monitors messages transmitted by a base station on a control channel in order to enable a fast call set-up. The user may select for a mobile station a normal operating mode, in which messages on the control channel are monitored continuously, as well as an alternative operating mode, in which the mobile station may stop monitoring the control channel at suitable moments for a time of absence known by the radio network, during which time the radio network does not try to send messages to the mobile station.

US patent application US2004/105400 describes a system and method for managing communications in a packet data service network includes activating a dormant function without determining a protocol standard used by a mobile station. This is accomplished by receiving a message from the mobile station which indicates that the mobile station supports the dormant function. The message may be a service connect complete message, a state response message issued in response to a state request message from a base station controller, or a message specially formed to notify a base station controller of whether the mobile station supports a dormant function. Through the transmission and subsequent processing of this message, call processing in a packet data service network is made faster and more efficient compared with other methods.

### Summary of the Invention

An embodiment of the invention provides a method for identifying the state of a listener during a trunking communication process, so that during a trunking communication, the network side may know the state and location of a listener, thus it is convenient for the network side to control and manage the listener.

Embodiments of the invention provide the following technical solutions.

An embodiment of the invention provides a method for identifying a listener state during a trunking communication process, including:
reporting listener state information to a network side by a mobile terminal acting as a listener in a trunking communication via an idle uplink channel; and
identifying the listener state of the mobile terminal according to the listener state information after the network side receives the listener state information wherein: the network side sends a notification of reporting listener state information to the mobile terminal when an uplink channel is idle, and the mobile terminal reports the listener state information to the network side according to the notification of reporting listener state information via the idle uplink channel, wherein the notification of reporting listener state information comprises: a sequence number of a mobile terminal which needs to report the listener state information;
wherein: after the mobile terminal receives the notification of reporting listener state information, the mobile terminal determines a time for the mobile terminal to report the listener state information according to a frame number of the notification of reporting listener state information, a sequence number of the mobile terminal stored in the mobile terminal and the sequence number of the mobile terminal which needs to report the state information currently, and reports (13) the state information of the mobile terminal to the network side at the time determined.

According to a further embodiment the network side broadcasts a notification of reporting listener state information to all the mobile terminals in the group when an uplink channel is idle; and
the mobile terminal reports the listener state information to the network side via the idle uplink channel after the mobile terminal receives the notification.

According to a further embodiment the notification of reporting listener state information includes:
specific listener state information.

According to a further embodiment after the mobile terminal receives the notification of reporting listener state information, the mobile terminal determines a time for the mobile terminal to report listener state information according to a frame number of the notification of reporting listener state information, a sequence number of the mobile terminal stored in the mobile terminal and a sequence number of a mobile terminal which needs to report the state information currently, and reports the state information of the mobile terminal to the network side at the time determined.

According to a further embodiment, determining the time to report the listener state information includes:
obtaining a numerical value S by subtracting the sequence number of the mobile terminal which needs to report listener state information currently from the frame number of the current message modulo the total number of users in the trunking group; and
obtaining a numerical value N by the mobile terminal by subtracting the numerical value S from the frame number of the notification of reporting listener state information modulo the total number of users in the trunking group, and determining that the numerical value N is the time to report the listener state information of the mobile terminal if the numerical value N is equal to the sequence number of the mobile terminal, and
adding the total number of users in the trunking group to the numerical value N to obtain a numerical value which is then compared with the sequence number of the mobile terminal if the numerical value N is less than 0.

According to a further embodiment the mobile terminal reports the state information by sending an access burst signal ACCESS BURST in the uplink of a group call channel, a specific listener state information filled in as an access reason value in ACCESS BURST.

According to a further embodiment the network side identifying the state of the listener based on the state information includes:
determining a sequence number of the mobile terminal which sends the ACCESS BURST according to the a frame number of the ACCESS BURST and notifying the MSC (Mobile Switch Center) after a base station of the network side receives the ACCESS BURST;
determining a Mobile Station International ISDN Number (MSISDN) of the mobile terminal which sends the signal by the MSC according to the sequence number of the mobile terminal and a correspondence table of the stored mobile terminal sequence number and the MSISDN; and
determining that the mobile terminal with the number of the MSISDN is in listener-receiving state.

According to a further embodiment if a mobile terminal of which the listener state information is not received by the network side in a set time, determining that the mobile terminal is not in receiving state.

According to a further embodiment the method further includes:
sending a message of stopping reporting listener state information to the mobile terminal and storing a sequence number of the mobile terminal which reports the listener state information last when the network side receives an Access Request Conflict or an ACCESS BURST of non-listener state information reported.

According to a further embodiment the method further includes the following step:
sending a message of starting reporting listener state information to the mobile terminal by the network side in a set time when the uplink channel is idle again and then turning to the step of reporting the listener state information to a network side by a mobile terminal, wherein the message carries the sequence number of the mobile terminal which needs to report listener state information currently, and the time interval between a set time and a time to send the message of stopping reporting listener state information should not be less than twice of the maximum retransmission time interval of the mobile terminal.

According to a further embodiment when the uplink channel is idle and there exists no interference, the mobile terminal reports the listener state information to the network side via the idle uplink channel. Specifically, the network side determines whether interference exists on the uplink channel. According to a further embodiment the network side determining whether interference exists on the uplink channel includes:
detecting a noise reception level of the uplink channel by the network side in a real time manner when the uplink is idle, and
determining that no interference exists on the uplink channel if the noise reception level is less than a set threshold.

According to a further embodiment the method further includes:
filtering the listener state information reported repeatedly by the network side.

It can be seen from the above technical solution provided by the embodiment that in the embodiment, a mobile terminal that acts as a listener during a trunking communication may send a message of reporting listener state information when the uplink channel is idle, and thereby the network side may know the state of each listener according to the message, so that the network side may easily know which of the listeners can receive the group call messages delivered and which cannot, thus it is convenient for the network side to control and manage each of the users (listeners) in the trunking.

In embodiments of the invention, the requirements may be met by adding functions of identifying a message of reporting or stopping reporting listener state information to a mobile terminal. Moreover, it may be well compatible with mobile terminals without the corresponding functions.

According to a further aspect a mobile terminal for use in a trunking communication process is provided, comprising:
means for receiving a notification of reporting listener state information from a network side; and
means for reporting listener state information to the network side via an idle uplink channel according to the notification of reporting listener state information
wherein the notification of reporting listener state information comprises: a sequence number of the mobile terminal which needs to report the state information;
wherein the mobile terminal further comprises: means for determining a time for the means for reporting the listener state information to report listener state information according to a frame number of the notification of reporting listener state information, a sequence number of the mobile terminal stored in the mobile terminal and the sequence number of the mobile terminal which needs to report the state information currently after the means for receiving the notification of reporting listener state information receives the notification of reporting listener state information.

### Brief Description of the Drawings

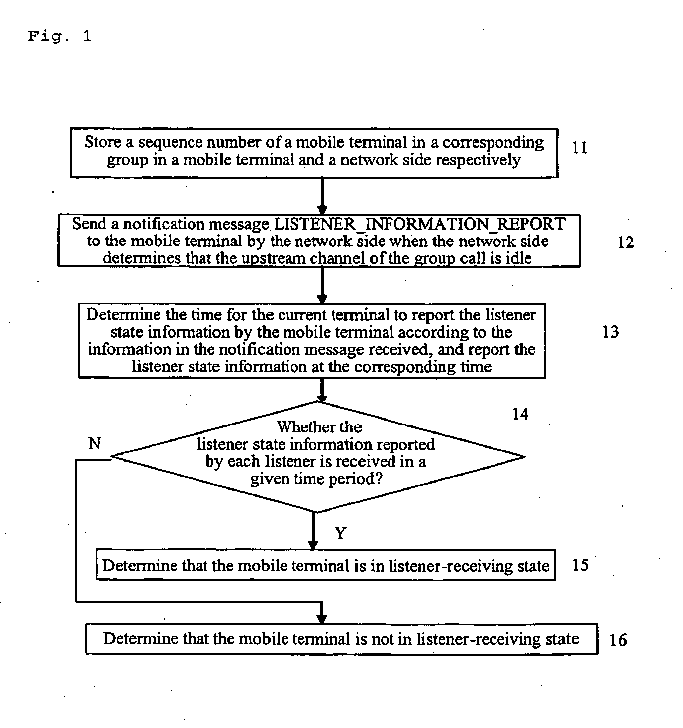

Fig.1 is a flow chart of the method according to an embodiment of the invention.

### Detailed Description of the Embodiments

In trunking communication, each trunking user (mobile terminal) needs to send a message reporting a listener's information to the network side, and the network side may determine a state of a trunking user, that is, whether the trunking user is in listener-receiving state, according to the message reported by the trunking user.

A method according to an embodiment of the invention will now be further illustrated in conjunction with the drawings. As shown in Fig.1, the method includes the following steps.

Step 11: storing a sequence number of a mobile terminal in a corresponding trunking (group) in a mobile terminal and an HLR (Home Location Register) of the network side respectively, so that a message sent may be identified between the mobile terminal and the network side mutually.

That is, the embodiments may apply to GT800 trunking service, the sequence number of a mobile terminal in a group call (trunking) is stored in both a SIM (Subscriber Identity Module) card of the mobile phone (mobile terminal) and the HLR of the network side, and the sequence number of the mobile terminal in each group (trunking) is unique, so an MSISDN (Mobile Station International ISDN Number) corresponding to a mobile terminal may be determined in an MSC (Mobile Switch Center) by determining the sequence number of the mobile terminal in each group.

Step 12: sending a notification message reporting a listener state information to the mobile terminal by the network side via a group call downlink channel of the current cell when the network side, such as a base station of the network side, determines that the uplink channel between the network side and the mobile terminal acting as a listener in the trunking is idle;

An uplink channel is idle when it is unoccupied. Usually, in a non-speaker cell, the uplink channel is idle all the time, while in a speaker cell, the uplink channel is occupied by a speaker, and the uplink channel will not become idle until the speaker stops speaking and releases the uplink channel.

When a base station in the network sends a message LISTENER_INFORMATION_REPORT on an FACCH (Fast Associated Control Channel) to a mobile terminal in the group in the case that the uplink channel of the current cell is idle, a listener reporting function will be activated. The message carries the sequence number of the mobile terminal which needs to report the listener state information; for example, a group sequence number X indicates that the mobile terminal with a group sequence number X is currently required to start reporting the listener state information.

Usually, after a group call trunking is established, the uplink and downlink channels will be connected all the time. In a cell in which there are no speakers in the group call, or in a non-speaker cell, or in a speaker cell in which a speaker occupies a dedicated channel rather than a group call channel, the group call uplink channel is in idle state, and may be used to report the listener state information indicating whether the user is online.

In another embodiment of the invention, the mobile terminal reports the listener state information to the network side in response to a network paging answer of the network side. In still another embodiment of the invention, the mobile terminal sends the state information to the network side initiatively; specifically, the mobile terminal requests for a channel from the network side and reports the listener state information to the network side via the channel assigned by the network side.

Step 13: when the mobile terminal acting as a listener receives a notification message of starting reporting the listener state information from the base station, the mobile terminal learns that the uplink channel through which it is in trunking communicates with the network side is idle and the listener state information can be reported to the network side from. Thus the mobile terminal determines a time for the mobile terminal to report the listener state information according to the content carried by the notification message of starting reporting the listener state information and a frame number.

Since a frame number in the mobile terminal is kept synchronous with a frame number in a base station of the network side, it may be determined that on which frame the listener state information is to be reported. The method for determining the frame number on which the listener state information is reported is described as follows.

To facilitate the description and understanding, it is assumed that:
(1) a total number of the group users, i.e. a number of all the users contained in the trunking, is SUM;
(2) there are X-1 users who have reported a listener state message, and the current frame is FN0, and now the mobile terminal with a sequence number of X is required to report its listener state information; and
(3) subsequently, the mobile terminal with a sequence number of X+1 is required to report the listener state information on frame FN1, and the rest may be deduced by analogy.

After the base station receives the message, the listener state information may be reported in the order of the frame number and the sequence number of the mobile terminal.

In a mobile communication system, frame number is defined as follows:
T1 (11 bits) range 0 to 2047= FN div (26 x 51);
T2 (5 bits) range 0 to 25= FN mod 26;
T3 (6 bits) range 0 to 50= FN mod 51;

It can be seen from the specifications in GSM 05.02 protocol that in a mobile communication system, the maximum frame number FN_MAX = (26 x 51 x 2048) -1 = 2715647;

Therefore, the mobile terminal obtains the time when the mobile terminal needs to report the listener state information according to the sequence number of the mobile terminal which needs to start reporting the listener state information obtained from the message LISTENER_INFORMATION_REPORT, via the following algorithm.

It is assumed that the current frame number is FN0, the total number of the group users is SUM, and the sequence number of the mobile phone which needs to start reporting the listener state information is X, then:
a numerical value S=[(FN0 mod SUM)- X] is computed first.

N=(FN mod SUM)-S, wherein N is the sequence number of the mobile terminal and N>=0, FN is the frame number on which a mobile terminal with a sequence number of N reports the listener state information.

When N<0, a numerical value M=N+SUM will be computed, wherein M is the sequence number of the mobile terminal which needs to report the listener state information on frame number FN;

For example, the current frame number is 20, the total number of the group users is 12, and currently the user with a sequence number of 5 needs to report listener state information, then:
FNO=20, SUM=12, X=5
S=(20mod12)-5=3

On frame 20, the frame number FN=20, and (20 mod 12) -3=5, N=5>0, so the mobile phone with a sequence number of 5 reports the listener state information;

On frame 21, the frame number FN=21, and (21 mod 12) -3=6, N=6>0, so the mobile phone with a sequence number of 6 reports the listener state information;

On frame 22, the frame number FN=22, and (22 mod 12) -3=7, N=7>0, so the mobile phone with a sequence number of 7 reports the listener state information;

On frame 23, the frame number FN=23, and (23 mod 12) -3=8, N=8>0, so the mobile phone with a sequence number of 8 reports the listener state information;

On frame 24, the frame number FN=24, and (24 mod 12) -3= -3, M=-3+12=9, so the mobile phone with a sequence number of 9 reports the listener state information;

On frame 25, the frame number FN=25, and (25 mod 12) -3=-2, M=-2+12=10, so the mobile phone with a sequence number of 10 reports the listener state information;

On frame 26, the frame number FN=26, and (26 mod 12) -3=-1, M=-1 +12=11, so the mobile phone with a sequence number of 11 reports the listener state information;

On frame 27, the frame number FN=27, and (27 mod 12) -3=0, so the mobile phone with a sequence number of 0 reports the listener state information;

On frame 28, the frame number FN=28, and (28 mod 12) -3=1, so the mobile phone with a sequence number of 1 reports the listener state information;

On frame 29, the frame number FN=29, and (29 mod 12) -3=2, so the mobile phone with a sequence number of 2 reports the listener state information;

On frame 30, the frame number FN=30, and (30 mod 12) -3=3, so the mobile phone with a sequence number of 3 reports the listener state information;

On frame 31, the frame number FN=31, and (31 mod 12) -3=4, so the mobile phone with a sequence number of 4 reports the listener state information;

On frame 32, the frame number FN=32, and (32 mod 12) -3=5, so the mobile phone with a sequence number of 5 reports the listener state information;

Since SUM is 12, 12 frames form a cycle, and a process in which all the listeners in a trunking report the listener state information will be accomplished during one cycle; by the same token, in the subsequent process, the cycle will again be accomplished according to the frame number, till the current group call is cancelled.

In general, the mobile terminal reports listener state information by sending an access burst signal ACCESS BURST via the uplink of a group call channel, reporting listener state information being filled in as the access reason value of the access burst signal.

Step 14: determining by the network side whether the listener state information reported by each listener in the trunking is received in a set time period, if YES, then turn to Step 15; otherwise, turn to Step 16.

In the duration of a group call, all the group users (mobile terminals) report the listener state information periodically, and the base station determines the state of the users, that is, whether the users are in listener-receiving state, via the ACCESS BURST received. If the listener state information is not received accidentally, it will not be determined at once that the user is not on-position; instead, a filtration mechanism will be adopted, as shown below.

In one reporting cycle, when the listener state information reported by a user is received, the counter of the user will be increased by 2, if a set upper limit value is exceeded, then the upper limit value is kept; when no listener state information is received, the counter will be decreased by 1, if a set lower limit value is exceeded, then the lower limit value is kept; the intermediate value between the upper and lower limit values (usually 0) is taken as a ruler to determine whether a listener is online; if the counter is lower than the ruler, the user will be determined as not on-position, and if the counter is higher than the ruler, the user will be determined as on-position; as a result, false on-position situation caused by false report may be effectively avoided. For example, the upper and lower limit values are 10 and -10 respectively, and the value of the counter is -10 currently. If still no listener state information is received in the next cycle, then the value of the counter still keeps -10, if listener state information is received, then the value of the counter is modified as -8, but it is still determined that the listener is not on-position, and it will be determined that the listener is on-position till the value of the counter is greater than 0.

Because of the interference of an air interface and uncertainties such as multipath and so on, there exists no confirmation mechanism for the listener state information reported by a mobile terminal, thus false report may occur. Therefore, the listener state information repeatedly reported should be processed using the above filtration mechanism, so that problems caused by false report may be solved.

Step 15: receiving the listener state information which is sent from a mobile terminal and determining that the mobile terminal is in listener-receiving state by the network side.

Specifically, after a base station of the network side resolves the ACCESS BURST, the sequence number of the mobile terminal which sends the access burst signal is determined according to the current frame number of the base station, and the base station notifies the MSC (Mobile Switch Center) of the sequence number; the MSC determines the MSISDN of the mobile terminal which sends the signal according to the sequence number of the mobile terminal and the correspondence table of the stored mobile terminal sequence numbers and the MSISDNs of mobile phones, and sets the mobile terminal with the number of the MSISDN as in listener-receiving state.

Step 16: determining that the mobile terminal is not in listener-receiving state.

Through the above process, the network side may exactly know whether each mobile terminal in the trunking may receive the group call information delivered.

In the embodiments, since other burst signals may be sent to the network side in the network via the corresponding uplink channel during the process in which listener state information is reported by the mobile terminal. For example, a PTT (Push-to-Talk) access may occur on the uplink. When a PTT access request of a certain mobile terminal is sent via the uplink channel, because the PTT access is random, during the process in which the listener message is reported, if a user of the cell reports listener identification information at this point, conflict with the access BURST initiated by the PTT access will certainly occur. Therefore, the signal of the listener state information reported by the mobile terminal may conflict with other burst signals. As a result, the embodiments provide a corresponding solution. The corresponding solution will be illustrated by taking the case in which PTT access occurs on the uplink as an example; and for other burst signals, the process is similar.

When the base station receives an access request conflict (from which no access burst signal can be resolved) or receives a PTT access burst signal, it sends a message of stopping reporting listener state information LISTENER_INFORMATION_OVER to each mobile terminal in the trunking via an FACCH and stops reporting the listener state information via each mobile terminal, and the sequence number of the mobile terminal which reports the listener state information last is stored in the base station for re-reporting the listener state information in turn after the uplink channel is idle again (the user call is over), and it is required that the time interval between the time to send the stop message and the time to send the re-report message should not be less than twice of the maximum retransmission time interval; thus, a PTT access initiated by the user may be accessed successfully.

When the mobile terminal receives the stop message, it stops reporting the listener state information; if a user accesses at this time, then the user may initiate a PTT access burst signal access, and the base station will initiate an uplink channel busy message UPLINK_BUSY after it receives the PTT access burst signal; if no users initiate a PTT access burst signal at this time, then the uplink channel will be idle for a time period (base station timer), and no new PTT access burst signals access, at this point, if the trunking (group call) still exists, then the base station may send a message of starting reporting listener state information LISTENER_INFORMATION_REPORT at a UM (between a user and a base station) interface, and each mobile terminal in the group call re-reports listener state information in turn.

When interference exists on the uplink, the uplink interference may also cause uplink decode error; at this point, the base station cannot distinguish between the interference and the PTT access initiated by the user. Therefore, the base station still adopts the above PTT access process. Because the ACCESS BURST has only a few bytes, the interference may be decoded as the state information and thus false report may be caused. To ensure that no listener state information will be reported falsely when interference occurs, noise reception level may be detected on the base station side in a real time manner when there is no access; if the noise reception level is less than a certain threshold, then it is determined that no interference exists on the uplink channel, and a process to report listener state information may be initiated, the message LISTENER_INFORMATION_REPORT is sent to the mobile terminal; otherwise, it is determined that interference exists on the uplink channel, and process to report listener state information will not be initiated, thus the above false report caused by interference may be avoided.

For mobile phones on the network that do not support the method of the embodiments, they cannot receive the message of reporting listener state information and so on which are sent, thus no access can be reported. When such mobile phones need to initiate a PTT competition, the process is the same as that of the mobile phone which supports this function, and there is no influence on the network.

A function of listener positioning may also be derived from the embodiments of the invention. The network side may obtain a TA (Timing Advance) by decoding the ACCESS BURST, one TA corresponding to a distance of 550 meters, and the location of a listener may be determined preliminary according to the positioning method of CELLID (Cell ID) + TA.

Additional advantages and modifications will readily occur to those skilled in the art. Therefore, the invention in its broader aspects is not limited to the specific details and representative embodiments shown and described herein. Accordingly, various modifications and variations may be made without departing from the scope of the invention as defined by the appended claims and their equivalents.

## Claims

1. A method for identifying a listener state during a trunking communication process, comprising:
reporting listener state information to a network side by a mobile terminal (13); and
identifying (14) the listener state of the mobile terminal according to the state information by the network side after the network side receives the state information;wherein: the network side sends (12) a notification of reporting listener state information to the mobile terminal when an uplink channel is idle, and the mobile terminal reports the listener state information to the network side according to the notification of reporting listener state information via the idle uplink channel, wherein the notification of reporting listener state information comprises: a sequence number of a mobile terminal which needs to report the listener state information;
wherein: after the mobile terminal receives the notification of reporting listener state information, the mobile terminal determines (13) a time for the mobile terminal to report the listener state information according to a frame number of the notification of reporting listener state information, a sequence number of the mobile terminal stored in the mobile terminal and the sequence number of the mobile terminal which needs to report the state information currently, and reports (13) the state information of the mobile terminal to the network side at the time determined.

2. The method for identifying a listener state during a trunking communication process according to claim 1, wherein determining the time to report the listener state information comprising:
obtaining a numerical value by subtracting the sequence number of the mobile terminal which needs to report listener state information currently from the frame number of the current message modulo the total number of users in a trunking group; and
obtaining a further numerical value by the mobile terminal by subtracting the numerical value from the frame number of the notification of reporting listener state information modulo the total number of users in the trunking group, and determining that the further numerical value is the time to report the listener state information of the mobile terminal if the further numerical value is equal to the sequence number of the mobile terminal, and adding the total number of users in the trunking group to the further numerical value to obtain a numerical value which is then compared with the sequence number of the mobile terminal if the further numerical value is less than 0.

3. The method for identifying a listener state during a trunking communication process according to claim 1 or 2, wherein:
the mobile terminal reports the state information by sending an access burst signal ACCESS BURST in the uplink of a group call channel, wherein the listener state information is filled in as an access reason value in the ACCESS BURST.

4. The method for identifying a listener state during a trunking communication process according to claim 3, wherein the network side identifying the state of the listener based on the state information comprising:
determining the sequence number of the mobile terminal which sends the ACCESS BURST according to a frame number of the ACCESS BURST and notifying a Mobile Switch Center after a base station of the network side receives the ACCESS BURST;
determining a Mobile Station International ISDN Number of the mobile terminal which sends the signal by the Mobile Switch Center according to the sequence number of the mobile terminal and a correspondence table of the stored mobile terminal sequence number and the Mobile Station International ISDN Number ; and
determining that the mobile terminal with the number of the Mobile Station International ISDN Number is in listener receiving state.

5. The method for identifying a listener state during a trunking communication process according to claim 1 or 2, further comprising:
if a mobile terminal of which the listener state information is not received by the network side in a set time, determining (16) that the mobile terminal is in non-receiving state.

6. The method for identifying a listener state during a trunking communication process according to claim 1 or 2, further comprising:
sending a message of stopping reporting listener state information to the mobile terminal and storing a sequence number of the mobile terminal which reports the listener state information last when the network side receives an Access Request Conflict or an ACCESS BURST of non-listener state information reported.

7. The method for identifying a listener state during a trunking communication process according to claim 6, further comprising:
sending a message of starting reporting listener state information to the mobile terminal by the network side in a set time when the uplink channel is idle again and reporting the listener state information to the network side by the mobile terminal, wherein the message of starting reporting listener state information carries the sequence number of the mobile terminal which needs to report listener state information currently, and a time interval between the set time and a time to send the message of stopping reporting listener state information should not be less than twice of a maximum retransmission time interval of the mobile terminal.

8. The method for identifying a listener state during a trunking communication process according to claim 1, wherein when there exists no interference, the mobile terminal reports the listener state information to the network side via the idle uplink channel.

9. The method for identifying a listener state during a trunking communication process according to claim 8, further comprising:
determining whether interference exists on the uplink channel by the network side.

10. The method for identifying a listener state during a trunking communication process according to claim 9, wherein the network side determining whether interference exists on the uplink channel comprising:
detecting a noise reception level of the uplink channel by the network side in a real time manner when the uplink is idle, and determining that no interference exists on the uplink channel if the noise reception level is less than a set threshold.

11. The method for identifying a listener state during a trunking communication process according to claim 1 or 2, further comprising:
filtering the listener state information reported repeatedly by the network side.

12. A mobile terminal for use in a trunking communication process, comprising:
means for receiving a notification of reporting listener state information from a network side; and
means for reporting listener state information to the network side via an idle uplink channel according to the notification of reporting listener state information;
wherein the notification of reporting listener state information comprises: a sequence number of the mobile terminal which needs to report the state information;
wherein the mobile terminal further comprises: means for determining a time for the means for reporting the listener state information to report listener state information according to a frame number of the notification of reporting listener state information, a sequence number of the mobile terminal stored in the mobile terminal and the sequence number of the mobile terminal which needs to report the state information currently after the means for receiving the notification of reporting listener state information receives the notification of reporting listener state information.

13. The mobile terminal for use in a trunking communication process according to claim 12, wherein, the means for determining a time for the means for reporting the listener state information to report listener state information comprises:
means for obtaining a numerical value by subtracting the sequence number of the mobile terminal which needs to report listener state information currently from the frame number of the current message modulo the total number of users in a trunking group; and
means for obtaining a further numerical value by subtracting the numerical value from the frame number of the notification of reporting listener state information modulo the total number of users in the trunking group, and determining that the further numerical value is the time to report the listener state information of the mobile terminal if the further numerical value is equal to the sequence number of the mobile terminal, and adding the total number of users in the trunking group to the further numerical value to obtain a numerical value which is then compared with the sequence number of the mobile terminal if the further numerical value is less than 0.

14. The mobile terminal for use in a trunking communication process according to claim 12, wherein the means for reporting the listener state information comprises:
means for reporting the state information by sending an access burst signal ACCESS BURST in the uplink of a group call channel, wherein the listener state information is filled in as an access reason value in the ACCESS BURST.

15. The mobile terminal for use in a trunking communication process according to claim 12, wherein the means for reporting the listener state information reports the listener state information to the network side via the idle uplink channel when there exists no interference.

## Patentansprüche

1. Verfahren zum Identifizieren eines Hörerzustands während eines Bündelkommunikationsprozesses, mit den folgenden Schritten:
Melden von Hörerzustandsinformationen an eine Netzseite durch ein mobiles Endgerät (13); und
Identifizieren (14) des Hörerzustands des mobilen Endgeräts gemäß den Zustandsinformationen durch die Netzseite, nachdem die Netzseite die Zustandsinformationen empfängt; wobei
die Netzseite eine Benachrichtigung des Meldens von Hörerzustandsinformationen zu dem mobilen Endgerät sendet (12), wenn ein Aufwärtsstreckenkanal frei ist, und das mobile Endgerät meldet der Netzseite die Hörerzustandsinformationen gemäß der Benachrichtigung des Meldens von Hörerzustandsinformationen über den freien Aufwärtsstreckenkanal, wobei die Benachrichtigung des Meldens von Hörerzustandsinformationen Folgendes umfasst: eine Sequenznummer eines mobilen Endgeräts, das die Hörerzustandsinformationen melden muss;
wobei
nachdem das mobile Endgerät die Benachrichtigung des Meldens von Hörerzustandsinformationen empfängt, das mobile Endgerät einen Zeitpunkt für das mobile Endgerät zum Melden der Hörerzustandsinformationen gemäß einer Rahmennummer der Benachrichtigung des Meldens von Hörerzustandsinformationen, einer in dem mobilen Endgerät gespeicherten Sequenznummer des mobilen Endgeräts und der Sequenznummer des mobilen Endgeräts, das die Zustandsinformationen gerade melden muss, bestimmt (13) und die Zustandsinformationen des mobilen Endgeräts zu dem bestimmten Zeitpunkt der Netzseite meldet (13).

2. Verfahren zum Identifizieren eines Hörerzustands während eines Bündelkommunikationsprozesses nach Anspruch 1, wobei das Bestimmen des Zeitpunkts zum Melden der Hörerzustandsinformationen Folgendes umfasst:
Erhalten eines numerischen Werts durch Subtrahieren der Sequenznummer des mobilen Endgeräts, das Hörerzustandsinformationen gerade melden muss, von der Rahmennummer der aktuellen Nachricht modulo der Gesamtzahl von Benutzern in einer Bündelgruppe; und
Erhalten eines weiteren numerischen Werts durch das mobile Endgerät durch Subtrahieren des numerischen Werts von der Rahmennummer der Benachrichtigung des Meldens von Hörerzustandsinformationen modulo der Gesamtzahl von Benutzern in der Bündelgruppe und Bestimmen, dass der weitere numerische Wert der Zeitpunkt zum Melden der Hörerzustandsinformationen des mobilen Endgeräts ist, wenn der weitere numerische Wert gleich der Sequenznummer des mobilen Endgeräts ist, und Addieren der Gesamtzahl von Benutzern in der Bündelgruppe zu dem weiteren numerischen Wert, um einen numerischen Wert zu erhalten, der dann mit der Sequenznummer des mobilen Endgeräts verglichen wird, wenn der weitere numerische Wert kleiner als null ist.

3. Verfahren zum Identifizieren eines Hörerzustands während eines Bündelkommunikationsprozesses nach Anspruch 1 oder 2, wobei
das mobile Endgerät die Zustandsinformationen durch Senden eines Zugangsburstsignals ACCESS BURST in der Aufwärtsstrecke eines Gruppenanrufkanals meldet, wobei die Hörerzustandsinformationen als ein Zugangsgrundwert in dem ACCESS BURST eingetragen werden.

4. Verfahren zum Identifizieren eines Hörerzustands während eines Bündelkommunikationsprozesses nach Anspruch 3, wobei das Identifizieren des Zustands des Hörers auf der Basis der Zustandsinformationen durch die Netzseite Folgendes umfasst:
Bestimmen der Sequenznummer des mobilen Endgeräts, das den ACCESS BURST sendet, gemäß einer Rahmennummer des ACCESS BURST und Benachrichtigen einer Mobilvermittlungsstelle, nachdem eine Basisstation der Netzseite den ACCESS BURST empfängt;
Bestimmen einer internationalen ISDN-Nummer von Mobilstationen des mobilen Endgeräts, das das Signal sendet, durch die Mobilvermittlungsstelle gemäß der Sequenznummer des mobilen Endgeräts und einer Korrespondenztabelle der gespeicherten Sequenznummer mobiler Endgeräte und der internationalen ISDN-Nummer von Mobilstationen; und
Bestimmen, dass sich das mobile Endgerät mit der Nummer der internationalen ISDN-Nummer von Mobilstationen im Hörerempfangszustand befindet.

5. Verfahren zum Identifizieren eines Hörerzustands während eines Bündelkommunikationsprozesses nach Anspruch 1 oder 2, ferner mit dem folgenden Schritt:
wenn von einem mobilen Endgerät die Netzseite die Hörerzustandsinformationen nicht in einer voreingestellten Zeit empfängt, Bestimmen (16), dass sich das mobile Endgerät in einem Nicht-Empfangszustand befindet.

6. Verfahren zum Identifizieren eines Hörerzustands während eines Bündelkommunikationsprozesses nach Anspruch 1 oder 2, ferner mit dem folgenden Schritt:
Senden einer Nachricht des Stoppens des Meldens von Hörerzustandsinformationen zu dem mobilen Endgerät und Speichern einer Sequenznummer des mobilen Endgeräts, das die Hörerzustandsinformationen zum letzten Mal meldet, wenn die Netzseite einen Zugangsanforderungskonflikt oder einen ACCESS BURST von gemeldeten Nicht-Hörerzustandsinformationen empfängt.

7. Verfahren zum Identifizieren eines Hörerzustands während eines Bündelkommunikationsprozesses nach Anspruch 6, ferner mit den folgenden Schritten:
Senden einer Nachricht des Startens des Meldens von Hörerzustandsinformationen zu dem mobilen Endgerät durch die Netzseite in einer voreingestellten Zeit, wenn der Aufwärtsstreckenkanal wieder frei ist, und Melden der Hörerzustandsinformationen an die Netzseite durch das mobile Endgerät, wobei die Nachricht des Startens des Meldens von Hörerzustandsinformationen die Sequenznummer des mobilen Endgeräts führt, das Hörerzustandsinformationen gerade melden muss, und ein Zeitintervall zwischen der voreingestellten Zeit und einem Zeitpunkt zum Senden der Nachricht des Stoppens des Meldens von Hörerzustandsinformationen nicht größer als zweimal ein maximales Neuübertragungszeitintervall des mobilen Endgeräts sein sollte.

8. Verfahren zum Identifizieren eines Hörerzustands während eines Bündelkommunikationsprozesses nach Anspruch 1, wobei, wenn keine Störungen bestehen, das mobile Endgerät die Hörerzustandsinformationen der Netzseite über den freien Aufwärtsstreckenkanal meldet.

9. Verfahren zum Identifizieren eines Hörerzustands während eines Bündelkommunikationsprozesses nach Anspruch 8, ferner mit dem folgenden Schritt:
Bestimmen durch die Netzseite, ob Störungen auf dem Aufwärtsstreckenkanal bestehen.

10. Verfahren zum Identifizieren eines Hörerzustands während eines Bündelkommunikationsprozesses nach Anspruch 9, wobei das Bestimmen durch die Netzseite, ob Störungen auf dem Aufwärtsstreckenkanal bestehen, Folgendes umfasst:
Detektieren eines Rauschempfangspegels des Aufwärtsstreckenkanals durch die Netzseite im Echtzeitverfahren, wenn die Auswärtsstrecke frei ist, und Bestimmen, dass keine Störungen auf dem Aufwärtsstreckenkanal bestehen, wenn der Rauschempfangspegel kleiner als eine eingestellte Schwelle ist.

11. Verfahren zum Identifizieren eines Hörerzustands während eines Bündelkommunikationsprozesses nach Anspruch 1 oder 2, ferner mit dem folgenden Schritt:
Filtern der wiederholt gemeldeten Hörerzustandsinformationen durch die Netzseite.

12. Mobiles Endgerät zur Verwendung bei einem Bündelkommunikationsprozess, umfassend:
Mittel zum Empfangen einer Benachrichtigung des Meldens von Hörerzustandsinformationen von einer Netzseite; und
Mittel zum Melden von Hörerzustandsinformationen an die Netzseite über einen freien Aufwärtsstreckenkanal gemäß der Benachrichtigung des Meldens von Hörerzustandsinformationen;
wobei die Benachrichtigung des Meldens von Hörerzustandsinformationen Folgendes umfasst: eine Sequenznummer des mobilen Endgeräts, das die Zustandsinformationen melden muss;
wobei das mobile Endgerät ferner Folgendes umfasst:
Mittel zum Bestimmen eines Zeitpunkts für die Mittel zum Melden der Hörerzustandsinformationen für das Melden von Hörerzustandsinformationen gemäß einer Rahmennummer der Benachrichtigung des Meldens von Hörerzustandsinformationen, einer in dem mobilen Endgerät gespeicherten Sequenznummer des mobilen Endgeräts und der Sequenznummer des mobilen Endgeräts, das die Zustandsinformationen gerade melden muss, nachdem die Mittel zum Empfangen der Benachrichtigung des Meldens von Hörerzustandsinformationen die Benachrichtigung des Meldens von Hörerzustandsinformationen empfangen.

13. Mobiles Endgerät zur Verwendung bei einem Bündelkommunikationsprozess nach Anspruch 12, wobei die Mittel zum Bestimmen eines Zeitpunkts für die Mittel zum Melden der Hörerzustandsinformationen für das Melden von Hörerzustandsinformationen Folgendes umfassen:
Mittel zum Erhalten eines numerischen Werts durch Subtrahieren der Sequenznummer des mobilen Endgeräts, das Hörerzustandsinformationen gerade melden muss, von der Rahmennummer der aktuellen Nachricht modulo der Gesamtzahl von Benutzern in einer Bündelgruppe; und
Mittel zum Erhalten eines weiteren numerischen Werts durch Subtrahieren des numerischen Werts von der Rahmennummer der Benachrichtigung des Meldens von Hörerzustandsinformationen modulo der Gesamtzahl von Benutzern in der Bündelgruppe und Bestimmen, dass der weitere numerische Wert der Zeitpunkt zum Melden der Hörerzustandsinformationen des mobilen Endgeräts ist, wenn der weitere numerische Wert gleich der Sequenznummer des mobilen Endgeräts ist, und
Addieren der Gesamtzahl von Benutzern in der Bündelgruppe zu dem weiteren numerischen Wert, um einen numerischen Wert zu erhalten, der dann mit der Sequenznummer des mobilen Endgeräts verglichen wird, wenn der weitere numerische Wert kleiner als null ist.

14. Mobiles Endgerät zur Verwendung bei einem Bündelkommunikationsprozess nach Anspruch 12, wobei die Mittel zum Melden der Hörerzustandsinformationen Folgendes umfassen:
Mittel zum Melden der Zustandsinformationen durch Senden eines Zugangsburstsignals ACCESS BURST in der Aufwärtsstrecke eines Gruppenanrufkanals, wobei die Hörerzustandsinformationen als ein Zugangsgrundwert in dem ACCESS BURST eingetragen werden.

15. Mobiles Endgerät zur Verwendung bei einem Bündelkommunikationsprozess nach Anspruch 12, wobei die Mittel zum Melden der Hörerzustandsinformationen die Hörerzustandsinformationen der Netzseite über den freien Aufwärtsstreckenkanal melden, wenn keine Störungen bestehen.

## Revendications

1. Procédé pour identifier l'état d'un récepteur au cours d'un processus de communication avec jonction, comportant les étapes consistant à :
faire rendre compte (13) d'informations d'état du récepteur à un côté réseau par un terminal mobile ; et
faire identifier (14) par le côté réseau l'état de récepteur du terminal mobile en fonction des informations d'état après que le côté réseau a reçu les informations d'état : le côté réseau envoyant (12) une notification de compte rendu des informations d'état du récepteur au terminal mobile lorsqu'un canal ascendant est au repos, et le terminal mobile rendant compte des informations d'état du récepteur au côté réseau en fonction de la notification de compte rendu des informations d'état du récepteur via un canal ascendant au repos, la notification de compte rendu des informations d'état du récepteur comprenant : un numéro de séquence d'un terminal mobile qui doit rendre compte des informations d'état du récepteur ; le terminal mobile déterminant (13), après que le terminal mobile a reçu la notification, un instant de compte rendu par le terminal mobile des informations d'état du récepteur en fonction d'un numéro de trame de la notification de compte rendu des informations d'état du récepteur, d'un numéro de séquence du terminal mobile mémorisé dans le terminal mobile et d'un numéro de séquence du terminal mobile qui doit actuellement rendre compte des informations d'état, et rendant compte (13) des informations d'état du terminal mobile au côté réseau à l'instant déterminé.

2. Procédé pour identifier l'état d'un récepteur au cours d'un processus de communication avec jonction selon la revendication 1, la détermination de l'instant de compte rendu des informations d'état du récepteur comportant les étapes consistant à :
obtenir une valeur numérique en soustrayant le numéro de séquence du terminal mobile qui doit actuellement rendre compte des informations d'état du récepteur du numéro de trame du message en cours modulo le nombre total d'utilisateurs dans un groupe de jonction ; et
faire obtenir par le terminal mobile une valeur numérique supplémentaire en soustrayant la valeur numérique du numéro de trame de la notification de compte rendu des informations d'état du récepteur modulo le nombre total d'utilisateurs dans le groupe de jonction, déterminer que la valeur numérique supplémentaire est l'instant de compte rendu des informations d'état de récepteur du terminal mobile si la valeur numérique supplémentaire est égale au numéro de séquence du terminal mobile, et ajouter le nombre total d'utilisateurs dans le groupe de jonction à la valeur numérique supplémentaire pour obtenir une valeur numérique qui est alors comparée au numéro de séquence du terminal mobile si la valeur numérique supplémentaire est inférieure à 0.

3. Procédé pour identifier l'état d'un récepteur au cours d'un processus de communication avec jonction selon la revendication 1 ou 2 :
le terminal mobile rendant compte des informations d'état en envoyant un signal d'accès en rafale ACCESS BURST dans la voie montante d'un canal d'appel de groupe, les informations d'état du récepteur étant insérées en tant que valeur de la raison d'accès dans l'ACCESS BURST.

4. Procédé pour identifier l'état d'un récepteur au cours d'un processus de communication avec jonction selon la revendication 3, l'identification par le côté réseau de l'état du récepteur sur la base des informations d'état comportant les étapes consistant à :
déterminer le numéro de séquence du terminal mobile qui envoie l'ACCESS BURST en fonction d'un numéro de trame de l'ACCESS BURST et notifier un Centre de commutation mobile après qu'une station de base du côté réseau a reçu l'ACCESS BURST ;
faire déterminer par le Centre de commutation mobile un Numéro RNIS international de station mobile du terminal mobile qui envoie le signal en fonction du numéro de séquence du terminal mobile et d'une table de correspondance du numéro de séquence mémorisé du terminal mobile et du Numéro RNIS international de station mobile ; et
déterminer que le terminal mobile dont le numéro est le Numéro RNIS international de station mobile est en état d'écoute en réception.

5. Procédé pour identifier l'état d'un récepteur au cours d'un processus de communication avec jonction selon la revendication 1 ou 2, comportant en outre l'étape consistant :
dans le cas d'un terminal mobile dont les informations d'état du récepteur n'ont pas été reçues par le côté réseau à l'issue d'un temps donné, à déterminer (16) que le terminal mobile est en état de non-réception.

6. Procédé pour identifier l'état d'un récepteur au cours d'un processus de communication avec jonction selon la revendication 1 ou 2, comportant en outre l'étape consistant à :
envoyer au terminal mobile un message visant à arrêter de rendre compte des informations d'état du récepteur et mémoriser un numéro de séquence du terminal mobile qui rend compte des informations d'état du récepteur en dernier lieu lorsque le côté réseau reçoit un Conflit de demande d'accès ou un ACCESS BURST de compte rendu d'informations ne portant pas sur l'état d'un récepteur.

7. Procédé pour identifier l'état d'un récepteur au cours d'un processus de communication avec jonction selon la revendication 6, comportant en outre l'étape consistant à :
faire envoyer par le côté réseau au terminal mobile un message visant à commencer à rendre compte des informations d'état du récepteur dans un temps donné lorsque le canal ascendant est de nouveau au repos et faire rendre compte par le terminal mobile des informations d'état du récepteur au côté réseau, le message visant à commencer à rendre compte des informations d'état du récepteur acheminant le numéro de séquence du terminal mobile qui doit actuellement rendre compte des informations d'état du récepteur, et un intervalle de temps entre le temps donné et un instant d'envoi du message visant à arrêter de rendre compte des informations d'état du récepteur ne devant pas être inférieur à deux fois l'intervalle de temps maximal de réémission du terminal mobile.

8. Procédé pour identifier l'état d'un récepteur au cours d'un processus de communication avec jonction selon la revendication 1, le terminal mobile rendant compte des informations d'état du récepteur au côté réseau via le canal ascendant au repos lorsqu'il n'existe aucune interférence.

9. Procédé pour identifier l'état d'un récepteur au cours d'un processus de communication avec jonction selon la revendication 8, comportant en outre l'étape consistant à :
faire déterminer par le côté réseau s'il existe une interférence sur le canal ascendant.

10. Procédé pour identifier l'état d'un récepteur au cours d'un processus de communication avec jonction selon la revendication 9, la détermination par le côté réseau de l'existence ou non d'une interférence sur le canal ascendant comportant l'étape consistant à :
faire détecter en temps réel par le côté réseau un niveau de réception de bruit du canal ascendant lorsque la voie ascendante est au repos, et déterminer qu'il n'existe aucune interférence sur le canal ascendant si le niveau de réception de bruit est inférieur à un seuil spécifié.

11. Procédé pour identifier l'état d'un récepteur au cours d'un processus de communication avec jonction selon la revendication 1 ou 2, comportant en outre l'étape consistant à :
faire filtrer par le côté réseau les informations d'état du récepteur faisant l'objet de comptes rendus répétés.

12. Terminal mobile destiné à être utilisé dans un processus de communication avec jonction, comportant :
un moyen servant à recevoir une notification de compte rendu d'informations d'état du récepteur provenant d'un côté réseau ; et
un moyen servant à rendre compte d'informations d'état du récepteur au côté réseau via un canal ascendant au repos en fonction de la notification de compte rendu d'informations d'état du récepteur ;
la notification de compte rendu d'informations d'état du récepteur comportant : un numéro de séquence du terminal mobile qui doit rendre compte des informations d'état du récepteur ;
le terminal mobile comportant en outre : un moyen servant à déterminer un instant où le moyen servant à rendre compte d'informations d'état du récepteur doit rendre compte des informations d'état du récepteur en fonction d'un numéro de trame de la notification de compte rendu des informations d'état du récepteur, d'un numéro de séquence du terminal mobile mémorisé dans le terminal mobile et d'un numéro de séquence du terminal mobile qui doit actuellement rendre compte des informations d'état, après que le moyen servant à recevoir une notification de compte rendu d'informations d'état du récepteur a reçu la notification de compte rendu d'informations d'état du récepteur.

13. Terminal mobile destiné à être utilisé dans un processus de communication avec jonction selon la revendication 12, le moyen servant à déterminer un instant où le moyen servant à rendre compte d'informations d'état du récepteur doit rendre compte des informations d'état du récepteur comportant :
un moyen servant à obtenir une valeur numérique en soustrayant le numéro de séquence du terminal mobile qui doit actuellement rendre compte des informations d'état du récepteur du numéro de trame du message en cours modulo le nombre total d'utilisateurs dans un groupe de jonction ; et
un moyen servant à obtenir une valeur numérique supplémentaire en soustrayant la valeur numérique du numéro de trame de la notification de compte rendu des informations d'état du récepteur modulo le nombre total d'utilisateurs dans le groupe de jonction, à déterminer que la valeur numérique supplémentaire est l'instant de compte rendu des informations d'état du récepteur du terminal mobile si la valeur numérique supplémentaire est égale au numéro de séquence du terminal mobile, et à ajouter le nombre total d'utilisateurs dans le groupe de jonction à la valeur numérique supplémentaire pour obtenir une valeur numérique qui est alors comparée au numéro de séquence du terminal mobile si la valeur numérique supplémentaire est inférieure à 0.

14. Terminal mobile destiné à être utilisé dans un processus de communication avec jonction selon la revendication 12, le moyen servant à rendre compte des informations d'état du récepteur comportant :
un moyen servant à rendre compte des informations d'état en envoyant un signal d'accès en rafale ACCESS BURST dans la voie montante d'un canal d'appel de groupe, les informations d'état du récepteur étant insérées en tant que valeur de la raison d'accès dans l'ACCESS BURST.

15. Terminal mobile destiné à être utilisé dans un processus de communication avec jonction selon la revendication 12, le moyen servant à rendre compte des informations d'état du récepteur rendant compte des informations d'état du récepteur au côté réseau via le canal ascendant au repos lorsqu'il n'existe aucune interférence.
